# EUROPEAN PATENT SPECIFICATION

(11) **EP 4 543 600 B1**
(45) Date of publication and mention of the grant of the patent: **15.04.2026**
(21) Application number: 24802592.6
(22) Date of filing: 11.03.2024
(51) Int. Cl.: B05B 13/04, B05C 5/02, B05D 1/26, C08J 5/12, F03D 1/06, G05B 19/05, B05C 11/00, B05C 7/02, B05C 11/10, B29C 65/48, B29C 65/52, B29C 65/00

(54) **MOBILE QUICK ADHESIVE DISPENSING METHOD FOR WIND TURBINE BLADE MOULDED BY LARGE MOULD**
MOBILES SCHNELLKLEBEAUSGABEVERFAHREN FÜR EINE GROSSE FORMGEFORMTE WINDTURBINENSCHAUFEL
PROCÉDÉ DE DISTRIBUTION D'ADHÉSIF RAPIDE MOBILE POUR PALE D'ÉOLIENNE MOULÉE AU MOYEN D'UN GRAND MOULE

(30) Priority: 18.01.2024 CN 202410073589
(43) Date of publication of application: 30.04.2025
(73) Proprietor: Gurit Tooling (Taicang) Co., Ltd., Suzhou, Jiangsu 215400 (CN)
(72) Inventor: CHEN, Binjiang, Los Angeles, California 91745 (US); JIN, Xinggang, Suzhou, Jiangsu 215400 (CN)
(74) Representative: Sun, Yiming
(86) International application number: PCT/CN2024/080948
(87) International publication number: WO 2024/230304

(56) References cited:
- WO-A1-2023/216673
- CN-A- 114 289 269
- CN-A- 115 646 764
- CN-A- 115 999 841
- CN-U- 212 288 808
- TW-U- M 588 584

## Description

### TECHNICAL FIELD

The present invention relates to the field of wind turbine blades, and particularly relates to a mobile quick adhesive dispensing method for a wind turbine blade moulded by a large mould.

### BACKGROUND

A series of new energy industries represented by the wind power industry face industry challenges in cycle time reduction and efficiency improvement, especially in the production of wind turbine blades. Manufactured wind turbine blades on the market have varying lengths, which have reached and exceeded 100 meters, and simultaneously, the volume of adhesives dispensed increases, thereby causing longer adhesive dispensing time and reduction of production efficiency and influencing the quality of products because of curing risks caused by too much time for adhesive dispensing in the blade making process.

In the prior art, wind turbine blades are bonded with adhesives in a fixed-point manner. Equipment conveys mixed adhesives onto paper boards or into basins according to the required weight, and workers transfer the adhesives to designated places manually. In this transport process, a great deal of manpower is consumed while the mixed adhesives may be cured to produce lots of solid wastes, which would have an adverse effect on the environment and cause a great loss of materials. In many cases, an adhesive dispensing procedure is not completed yet on part of areas of a wind turbine blade while some places the adhesives have been cured, thereby causing a reduction of production efficiency and extremely unstable quality of products. Besides, an adhesive dispensing system is separated from two sides of an adhesive dispensing head, thereby causing poor adhesive dispensing efficiency due to a lack of coordination between the adhesive dispensing system and the adhesive dispensing head in the adhesive dispensing process.

For example, an automatic positioning wind turbine blade adhesive dispensing device and adhesive dispensing method disclosed in CN 114289269 B, comprising positioning guide rails, a power driven moving platform and an adhesive dispensing tool arranged on the power driven moving platform and synchronously moving along with the power driven moving platform, the positioning guide rails are arranged on both sides of front and back edges of a main blade mould, installation positions of the positioning guide rails are determined based on a parting line of the front and back edges of the main blade mould as a positioning standard in conjunction with positioning data of webs in a blade so that the shape of the positioning guide rail on each side is the same as that of a stream line on one corresponding side of the blade; the adhesive dispensing tool, the power driven moving platform and the positioning guide rails in a specific shape are integrated into an automatic positioning wind turbine blade adhesive dispensing device, which can implement accurate positioning and adhesive dispensing, solve the problems of uneven manual adhesive dispensing effects and large positional deviation, eliminate bonding defects caused by positioning deviation and improve quality of products. At the same time, the device can implement synchronous and automated adhesive dispensing on bonding regions of webs on the front and back edges and improve operational efficiency. However, in the actual operation process, wind turbine blades have large sizes, and the volume of adhesives dispensed is large, so the adhesive supplementation process is complicated, and part of adhesive dispensed areas of the wind turbine blade has been cured while part of areas of the wind turbine blade are not coated with adhesives. Moreover, the structure is high in cost and not suitable for various types of mould.

For another example, a device and method for automatically positioning adhesive dispensing positions of a wind turbine blade in the adhesive dispensing process disclosed in the Chinese patent CN 115646764 A belong to the field of wind turbine blade adhesive dispensing technology. The device comprises a wall-mounted track, a cross beam, an adhesive dispensing device and a follow-up carrying trolley, the wall-mounted track is mounted on an I-beam of a stand column in a production workshop of a factory and is divided into an upper track and a lower track, the upper track and the lower track are respectively provided with an upper square tube and a lower square tube, and the upper square tube and the lower square tube together support a cross beam walking component; the cross beam comprises a cross beam main body and the cross beam walking component, and the cross beam walking component is connected to the cross beam main body through a rotating shaft; the cross beam provides supporting and guiding for the adhesive dispensing device; the adhesive dispensing device comprises a waling servo hoist, a balancer and a rubber boot and is suspended onto the cross beam main body; and the follow-up carrying trolley is used for carrying an adhesive dispensing system and control system hardware. The present invention can meet the demands of different adhesive dispensing areas of blades for adhesive dispensing processes and improve the adhesive dispensing operation efficiency and quality. The adhesive dispensing device in this structure is high in cost and not suitable for various types of mould, and also has a problem of low adhesive dispensing speeds, so the adhesive supplementation process is complicated, part of adhesive dispensed areas of a wind turbine blade have been cured while part of areas are not coated with adhesives and the working efficiency is low.

Document CN 115 999 841 discloses an integrated refined gluing device and method for wind power blade manufacturing, in which a coordinated system of structural supports, rails, beams and gluing assemblies enables systematized and data-driven precise gluing by collecting and matching position and adhesive information during operation.

### SUMMARY

The goal of the present invention is to solve deficiencies in the prior art, the present invention provides a mobile quick adhesive dispensing method for a wind turbine blade moulded by a large mould, and by this method, quick adhesive dispensing to large wind turbine blades can be realized, the adhesive dispensing process is accurate, and operation quality and efficiency are greatly improved.

The technical solution: to achieve the goal above, the mobile quick adhesive dispensing method for a wind turbine blade moulded by a large mould according to the present invention comprises the steps:
Step 1, installation
   placing a plurality of high-capacity adhesive mixer rail systems between two halves of a large wind turbine blade mould, installing a screw lift at one end of the high-capacity adhesive mixer rail systems, installing a receding device between the two adjacent high-capacity adhesive mixer rail systems, and determining the number of high-capacity adhesive mixers to be placed on the high-capacity adhesive mixer rail systems according to the volume of adhesives dispensed to a wind turbine blade;
Step 2, pre-inspection of the high-capacity adhesive mixers
   conveying a heavy-duty guided vehicle loaded with a high-capacity adhesive mixer onto a guided vehicle bearing platform, starting a switching power supply of a center console, feeding, by a weight sensor on the guided vehicle bearing platform, data back to a PLC circuit after receiving a signal by the weight sensor, determining, by the PLC circuit, whether the volume of adhesives in the high-capacity adhesive mixer satisfies a limit value according to the feedback data of the weight sensor, if the data of the weight sensor satisfies the limit value, sending, by the PLC circuit, a switch-on signal to the center console, and if the data of the weight sensor does not satisfy the limit value, sending, by the PLC circuit, a warning signal to the center console;
Step 3, conveying of the high-capacity adhesive mixers
   when the center console receives the switch-on signal sent by the PLC circuit, pressing, by an operator, an on button of the center console, sending, by the PLC circuit, signals to driving motors to allow the driving motors to rotate clockwise to drive self-locking screws connected thereto to rotate anticlockwise, so that the guided vehicle bearing platform horizontally and gradually moves upward to a specified position, sending, by position sensors located on frame mechanisms, signals to the PLC circuit, after the guided vehicle bearing platform moves upward to the specified position, sending, by the PLC circuit, rotating stop signals to the driving motors, sending, by the PLC circuit, a signal to a vehicle driving motor to drive the heavy-duty guided vehicle loaded with the high-capacity adhesive mixer to move on the high-capacity adhesive mixer rail system to the specified position;
Step 4, preparation for adhesive dispensing
   repeating Step 3, conveying a plurality of heavy-duty guided vehicles loaded with high-capacity adhesive mixers to the specified positions on the high-capacity adhesive mixer rail systems in sequence, sending, by the PLC circuit, signals to the high-capacity adhesive mixers, adjusting positions of adhesive outlets of the high-capacity adhesive mixers by rotating to correspond to the position of the large wind turbine blade mould to prepare for adhesive dispensing;
Step 5, adhesive dispensing
   sending, by the PLC circuit, signals to the vehicle driving motors and the high-capacity adhesive mixers, driving, by the heavy-duty guided vehicles, the high-capacity adhesive mixers to move back and forth on the high-capacity adhesive mixer rail systems at a constant speed, and dispensing, by the high-capacity adhesive mixers, adhesives uniformly to the large wind turbine blade mould, wherein the moving positions of the two adjacent heavy-duty guided vehicles are partially repeated;
Step 6, receding from a turning arm
   when the turning arm is required to join the two halves of the large wind turbine blade mould, sending, by the PLC circuit, signals to the heavy-duty guided vehicle to allow the heavy-duty guided vehicle to move to an initial specified position, sending, by the PLC circuit, signals to air pumps to stop the air pumps from feeding gas into a left air cylinder and a right air cylinder, so that piston rods of the left air cylinder and the right air cylinder return to the insides of pistons, thereby allowing a Left receding mechanism and a Right receding mechanism to be disconnected under the action of the left air cylinder and the right air cylinder, wherein a disconnected distance between the Left receding mechanism and the Right receding mechanism is a width required for the turning of the turning arm;
   When the turning arm completes the joining of the two halves of the large wind turbine blade mould, sending, by the PLC circuit, signals to the air pumps to allow the piston rods of the left air cylinder and the right air cylinder to be pushed out to push the Left receding mechanism and the Right receding mechanism upward respectively, so that the Left receding mechanism and the Right receding mechanism are respectively connected to the two adjacent high-capacity adhesive mixer rail systems to allow the heavy-duty guided vehicle loaded with the high-capacity adhesive mixer to go into a space between the Left receding mechanism and the Right receding mechanism from the high-capacity adhesive mixer rail system, subsequently go into the next high-capacity adhesive mixer rail system and finally arrive at the guided vehicle bearing platform located at one end of the frontmost high-capacity adhesive mixer rail system;
Step 7, landing of the high-capacity adhesive mixers
   sending, by the PLC circuit, signals to the driving motors to allow the driving motors to rotate anticlockwise to drive the self-locking screws connected thereto to rotate clockwise, so that the guided vehicle bearing platform horizontally and gradually moves downward to a specified position, sending, by the position sensors located on the frame mechanisms, signals to the PLC circuit, when the guided vehicle bearing platform moves downward to the specified position, sending, by the PLC circuit, rotating stop signals to the driving motors to allow the heavy-duty guided vehicle to land on the ground, and repeating the above actions until all the heavy-duty guided vehicles land on the ground; and
Step 8, repeating
   repeating Step 2 to Step 6 to complete the adhesive dispensing to a next blade to realize adhesive dispensing production of wind turbine blades in batches.

As a further preference of the present invention, in Step 3, the number of the high-capacity adhesive mixers distributed at a root portion of the large wind turbine blade mould accounts for 70%-75% of the total number of the high-capacity adhesive mixers.

As a further preference of the present invention, a length of a root portion of the large wind turbine blade mould accounts for 30%-40% of an overall length of the large wind turbine blade mould.

As a further preference of the present invention, in Step 4, the moving positions of the two adjacent heavy-duty guided vehicles are repeated by 10 cm-15 cm.

As a further preference of the present invention, in Step 4, an adhesive output volume of the high-capacity adhesive mixer is 10 L/min-20 L/min.

As a further preference of the present invention, two halves of the large wind turbine blade mould are arranged on both sides of the high-capacity adhesive mixer rail systems, and the receding device for receding from the turning arm is arranged between the two adjacent high-capacity adhesive mixer rail systems located in the straight line; because the turning arm is required to join and separate the two halves of the large wind turbine blade mould in the process of preparing a wind turbine blade, a width required for the turning of a turning mechanism is reserved on the high-capacity adhesive mixer rail systems so that the large wind turbine blade mould can be joined and separated without considering the influence of adhesive dispensing procedures, the receding devices can be opened in real time to allow the turning mechanism to be turned quickly, thereby improving production efficiency.

The screw lift is installed on the high-capacity adhesive mixer rail system located at one end of the large wind turbine blade mould. The heavy-duty guided vehicles loaded with the high-capacity adhesive mixers are conveyed onto the high-capacity adhesive mixer rail systems through the screw lift. When required, a plurality of high-capacity adhesive mixers are conveyed to specified positions on the high-capacity adhesive mixer rail systems through the screw lift in sequence.

As a further preference of the present invention, the screw lift comprises the guided vehicle bearing platform, the self-locking screws, the frame mechanisms, the driving motors, speed reducers, linear guide pillars and a base plate;
the two frame mechanisms arranged oppositely are respectively and perpendicularly installed on the base plate, the self-locking screws are fastened on the frame mechanisms, the linear guide pillars that are located on both sides of the self-locking screws and arranged parallel to the self-locking screws are fastened to the frame mechanisms respectively, both sides of the guided vehicle bearing platform horizontally installed above the base plate are respectively clamped onto the two opposite frame mechanisms, and output ends of the speed reducers secured on the base plate are connected to the self-locking screws; internal threads on the guided vehicle bearing platform are connected with external threads of the self-locking screws in a matched mode, and the linear guide pillars arranged oppositely are respectively clamped on side faces of the guided vehicle bearing platform; and the guided vehicle bearing platform moves up and down within the two frame mechanisms under rotation of the self-locking screws.

Since the two linear guide pillars and the self-locking screws are located in the same plane of the frame mechanisms and the two frame mechanisms are arranged oppositely, when receiving the signals of the PLC circuit and rotating simultaneously, the two driving motors rotate to drive the two self-locking screws to rotate, and both sides of the guided vehicle bearing platform are clamped to the linear guide pillars of the frame mechanisms, and at the moment, the two self-locking screws rotate to respectively drive the internal threads located on both sides of the guided vehicle bearing platform and connected with the self-locking screws in a matched mode to implement the horizontal movement of the guided vehicle bearing platform in a height direction.

As a further preference of the present invention, the two self-locking screws arranged oppositely are respectively fastened on the frame mechanisms, and both sides of the self-locking screws are each at least provided with a linear guide pillar.

As a further preference of the present invention, the heavy-duty guided vehicle comprises the vehicle driving motor, follower wheels, limit wheels and driving wheels which are all installed under a vehicle body, the vehicle driving motor is connected to the driving wheels, and the limit wheels fastened below the vehicle body are clamped in grooves in side faces of the high-capacity adhesive mixer rail system to limit the position of the heavy-duty guided vehicle relative to the high-capacity adhesive mixer rail system in a horizontal direction and a width direction.

Side faces of the high-capacity adhesive mixer rail system are provided with I-beams, and the follower wheels, and the limit wheels and the driving wheels are arranged in pairs; the limit wheels are clamped in grooves of the I-beams to guarantee stabilities of the heavy-duty guided vehicles in a horizontal direction and a perpendicular direction; the heavy-duty guided vehicles are trackless flat wagons purchased by the supplier Dongteng Intelligent Equipment Co. Ltd. Since operating modes and operating principles of the heavy-duty guided vehicles belong to the prior art and the heavy-duty guided vehicles have been widely used in the prior art, specific structures of the heavy-duty guided vehicles will not be illustrated again here.

As a further preference of the present invention, the receding device is hinged between the two adjacent high-capacity adhesive mixer rail systems, and the receding device comprises a Left receding mechanism and a Right receding mechanism which are respectively hinged to the high-capacity adhesive mixer rail systems through receding hinges, and a left air cylinder and a right air cylinder which are used for controlling the Left receding mechanism and the Right receding mechanism to be connected and disconnected, and the left air cylinder and the right air cylinder are respectively connected to air pumps.

As a further preference of the present invention, one end of the left air cylinder and one end of the right air cylinder are respectively hinged to supporting bases for supporting the high-capacity adhesive mixer rail system, and the other end of the left air cylinder and the other end of the right air cylinder are respectively hinged to the Left receding mechanism and the Right receding mechanism;
when the air pumps feed gas into the left air cylinder and the right air cylinder, the piston rods of the left air cylinder and the right air cylinder are pushed out to push the Left receding mechanism and the Right receding mechanism upward respectively, so that the Left receding mechanism and the Right receding mechanism are respectively connected to the two adjacent high-capacity adhesive mixer rail systems to allow the heavy-duty guided vehicle loaded with the high-capacity adhesive mixer to go into a space between the Left receding mechanism and the Right receding mechanism from the high-capacity adhesive mixer rail system and subsequently go into the next high-capacity adhesive mixer rail system;

When the air pumps stop feeding gas into the left air cylinder and right air cylinder, the piston rods of the left air cylinder and the right air cylinder return to their original positions to allow the Left receding mechanism and the Right receding mechanism to be disconnected under the action of the left air cylinder and the right air cylinder, and a disconnected distance between the Left receding mechanism and the Right receding mechanism is a width required for the turning of the turning arm.

As a further preference of the present invention, the total sum of lengths of the Left receding mechanism and the Right receding mechanism is equal to a distance between the two adjacent high-capacity adhesive mixer rail systems for supporting.

When the turning arm is required to join and separate the two halves of the large wind turbine blade mould, a width required for the turning of the turning mechanism is reserved on the high-capacity adhesive mixer rail systems so that the two halves of the large wind turbine blade mould can be joined and separated without considering the influence of adhesive dispensing procedures, and the receding devices can be opened in real time to allow the turning mechanism to be turned quickly.

The high-capacity adhesive mixers mounted on the heavy-duty guided vehicles are driven by the heavy-duty guided vehicles to move back and forth on the high-capacity adhesive mixer rail systems and uniformly dispense adhesives onto the large wind turbine blade mould through adhesive outlets of the high-capacity adhesive mixers, and a coating density of the adhesives is set according to the requirements of different wind turbine blades. The high-capacity adhesive mixers in the technical solution are purchased from the supplier DOPAG, and the model is gelcomlx. Since operating modes and operating principles of the high-capacity adhesive mixers belong to the prior art and the high-capacity adhesive mixers have been widely used in the prior art, specific structures of the high-capacity adhesive mixers will not be illustrated again here.

As a further preference of the present invention, the driving motors, the vehicle driving motors and the air pumps are connected to the PLC circuit respectively.

Beneficial effect: compared with the prior art, the mobile quick adhesive dispensing method for a wind turbine blade moulded by a large mould according to the present invention has the following advantages:
(1) the heavy-duty guided vehicles moving at a constant speed drive the high-capacity adhesive mixers to move at a constant speed, thereby achieving good consistency and small positional deviations of adhesive dispensing of the large wind turbine blade mould, and avoiding bonding defects of blades.
(2) through the cooperation of a plurality of high-capacity adhesive mixers and the receding devices, the adhesive dispensing to the large wind turbine blades can be completed within 30 min, thereby preventing a situation that part of adhesive dispensed areas have been cured while part of areas are not coated with adhesives because the large wind turbine blade mould is too large;
(3) the moving positions of the two adjacent heavy-duty guided vehicles are partially repeated, thereby preventing part of structures from being omitted and not coated with adhesives;
(4) the plurality of high-capacity adhesive mixers move leftward or rightward simultaneously, thereby ensuring that no interferences and collisions occur to the high-capacity adhesive mixers in the adhesive dispensing process, optimizing adhesive dispensing paths, realizing the quick and accurate adhesive dispensing process and greatly improving operation quality and efficiency; and
(5) the adhesive dispensing is completed quickly and efficiently through the automatic control of the PLC circuit on the screw lift, the heavy-duty guided vehicles, the high-capacity adhesive mixers and the receding devices, thereby realizing automated adhesive dispensing production of wind turbine blades in batches.

### BRIEF DESCRIPTION OF THE DRAWINGS

FIG. 1 is a structural schematic view of a state of preparation for adhesive dispensing according to the present invention;
FIG. 2 is a structural schematic view of implementing lifting according to the present invention;
FIG. 3 is a structural schematic view of a state of adhesive dispensing according to the present invention;
FIG. 4 is a structural schematic view of a heavy-duty guided vehicle;
FIG. 5 is a structural schematic view of a receding device of a turning mechanism;
FIG. 6 is a structural schematic view of a screw lift.

### DETAILED DESCRIPTION OF EMBODIMENTS

The present invention will be further described in combination with the accompanying drawings and the specific embodiments.

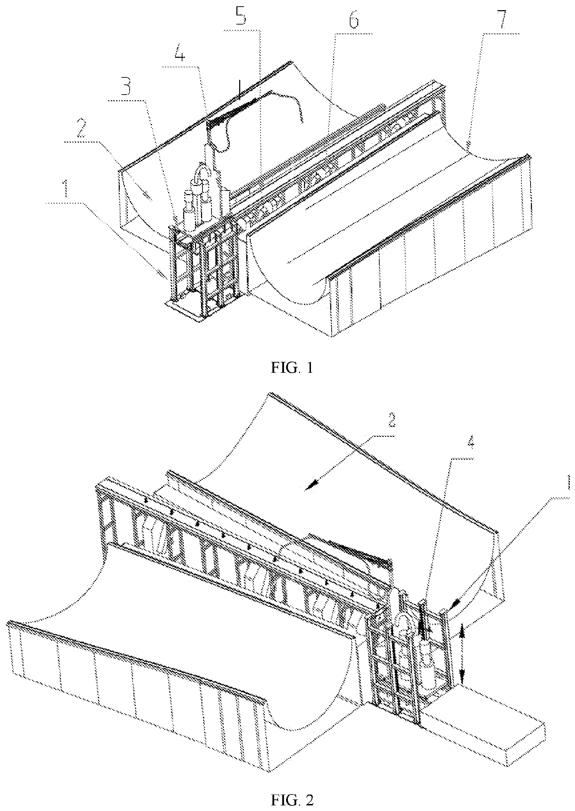

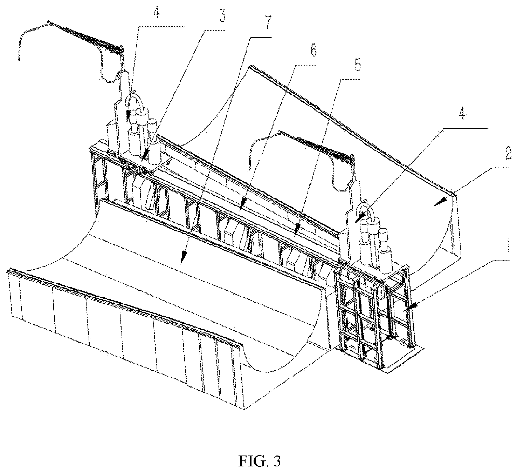

As shown in FIG. 1, FIG. 2 and FIG. 3, a mobile quick adhesive dispensing method for a wind turbine blade moulded by a large mould, includes the steps of installation, pre-inspection of high-capacity adhesive mixers, conveying of the high-capacity adhesive mixers, preparation for adhesive dispensing, adhesive dispensing, receding from a turning arm and landing of the high-capacity adhesive mixers.

### Embodiment 1

Step 1, placing a plurality of high-capacity adhesive mixer rail systems 5 between two halves of a large wind turbine blade mould 2, installing a screw lift 1 at one end of the high-capacity adhesive mixer rail systems 5, installing a receding device 6 between the two adjacent high-capacity adhesive mixer rail systems 5, and determining the number of high-capacity adhesive mixers 4 to be placed on the high-capacity adhesive mixer rail systems 5 according to the volume of adhesives dispensed to a wind turbine blade;

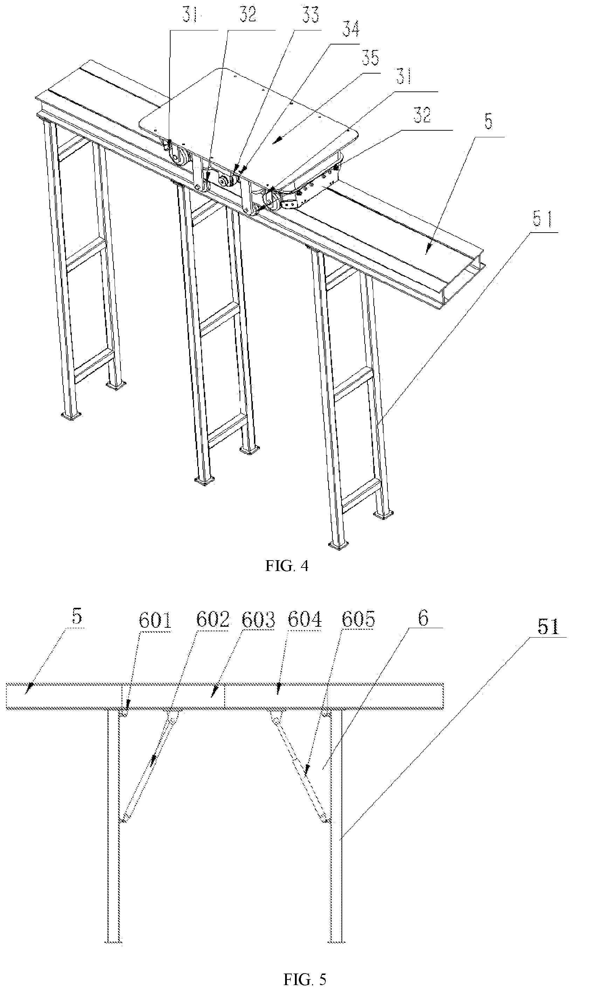

A vehicle driving motor 34, follower wheels 31, limit wheels 32 and driving wheels 33 are installed below a vehicle body 35, the vehicle driving motor 34 is connected to the driving wheels 33, and the limit wheels 32 fastened below the vehicle body 35 are clamped in grooves in side faces of the high-capacity adhesive mixer rail system 5 to limit the position of the heavy-duty guided vehicle 3 relative to the high-capacity adhesive mixer rail system 5 in a horizontal direction and a width direction, as shown in FIG. 4.

A left air cylinder 602 and a right air cylinder 605 are respectively connected to air pumps, a Left receding mechanism 603 and a Right receding mechanism 604 are respectively hinged to the high-capacity adhesive mixer rail systems 5 through receding hinges 601, the left air cylinder 602 and the right air cylinder 605 are used for controlling the Left receding mechanism 603 and the Right receding mechanism 604 to be connected and disconnected, and a disconnected size between the Left receding mechanism 603 and the Right receding mechanism 604 is a reserved spatial size required by a turning arm to turn the large wind turbine blade mould 2, as shown in FIG. 5.

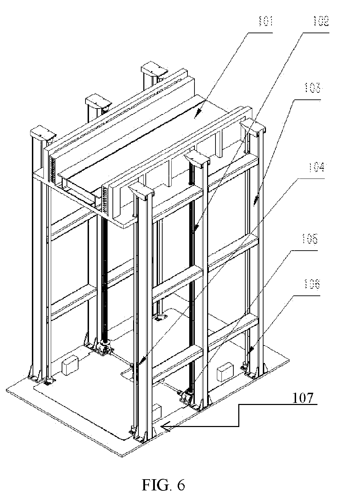

Two frame mechanisms 103 arranged oppositely are respectively and perpendicularly installed on a base plate 107, self-locking screws 102 are fastened on the frame mechanisms 103, linear guide pillars 106 that are located on both sides of the self-locking screws 102 and arranged parallel to the self-locking screws 102 are fastened to the frame mechanisms 103 respectively, both sides of a guided vehicle bearing platform 101 horizontally installed above the base plate 107 are respectively clamped onto the two opposite frame mechanisms 103, output ends of speed reducers 105 secured on the base plate 107 are connected to the self-locking screws 102, the guided vehicle bearing platform 101 moves up and down within the two frame mechanisms 103 under rotation of the self-locking screws 102 to convey a plurality of heavy-duty guided vehicles 3 loaded with the high-capacity adhesive mixers 4 into the high-capacity adhesive mixer rail systems 5 in sequence in a lifting mode, as shown in FIG. 6.
Step 2, conveying the heavy-duty guided vehicle 3 loaded with the high-capacity adhesive mixer 4 onto the guided vehicle bearing platform 101, starting a switching power supply of a center console, feeding, by a weight sensor on the guided vehicle bearing platform 101, data back to a PLC circuit after receiving a signal by the weight sensor, determining, by the PLC circuit, whether the volume of adhesives in the high-capacity adhesive mixer 4 satisfies a limit value according to the feedback data of the weight sensor, if the data of the weight sensor satisfies the limit value, sending, by the PLC circuit, a switch-on signal to the center console, and if the data of the weight sensor does not satisfy the limit value, sending, by the PLC circuit, a warning signal to the center console;
Step 3, when the center console receives the switch-on signal sent by the PLC circuit, pressing, by an operator, an on button of the center console, sending, by the PLC circuit, signals to driving motors 104 to allow the driving motors 104 to rotate clockwise to drive the self-locking screws 102 connected thereto to rotate anticlockwise, so that the guided vehicle bearing platform 101 horizontally and gradually moves upward to a specified position, sending, by position sensors located on the frame mechanisms 103, signals to the PLC circuit, after the guided vehicle bearing platform 101 moves upward to the specified position, sending, by the PLC circuit, rotating stop signals to the driving motors 104, sending, by the PLC circuit, a signal to the vehicle driving motor 34 to drive the heavy-duty guided vehicle 3 loaded with the high-capacity adhesive mixer 4 to move on the high-capacity adhesive mixer rail system 5 to the specified position;
Step 4, repeating Step 3, conveying a plurality of heavy-duty guided vehicles 3 loaded with the high-capacity adhesive mixers 4 to the specified positions on the high-capacity adhesive mixer rail systems 5 in sequence, sending, by the PLC circuit, signals to the high-capacity adhesive mixers 4, adjusting positions of adhesive outlets of the high-capacity adhesive mixers 4 by rotating to correspond to the position of the large wind turbine blade mould 2 to prepare for adhesive dispensing, wherein the number of the high-capacity adhesive mixers 4 distributed at a root portion of the large wind turbine blade mould 2 accounts for 70% of the total number of the high-capacity adhesive mixers 4, and a length of the root portion of the large wind turbine blade mould 2 accounts for 30% of an overall length of the large wind turbine blade mould 2;
Step 5, sending, by the PLC circuit, signals to the vehicle driving motors 34 and the high-capacity adhesive mixers 4, driving, by the heavy-duty guided vehicles 3, the high-capacity adhesive mixers 4 to move back and forth on the high-capacity adhesive mixer rail systems 5 at a constant speed, and dispensing, by the high-capacity adhesive mixers 4, adhesives uniformly to the large wind turbine blade mould 2 to obtain adhesive dispensing paths 7 distributed uniformly, wherein the moving positions of the two adjacent heavy-duty guided vehicles 3 are repeated by 10 cm, and an adhesive output volume of the high-capacity adhesive mixer 4 is 10 L/min;
Step 6, when the turning arm is required to join the two halves of the large wind turbine blade mould 2, sending, by the PLC circuit, a signal to the heavy-duty guided vehicle 3 to allow the heavy-duty guided vehicle 3 to move to an initial specified position, sending, by the PLC circuit, signals to the air pumps to stop the air pumps from feeding gas into the left air cylinder 602 and the right air cylinder 605, so that piston rods of the left air cylinder 602 and the right air cylinder 605 return to the insides of pistons, thereby allowing the Left receding mechanism 603 and the Right receding mechanism 604 to be disconnected under the action of the left air cylinder 602 and the right air cylinder 605, wherein a disconnected distance between the Left receding mechanism 603 and the Right receding mechanism 604 is a width required for the turning of the turning arm;
   when the turning arm completes the joining of the two halves of the large wind turbine blade mould 2, sending, by the PLC circuit, signals to the air pumps to allow the piston rods of the left air cylinder 602 and the right air cylinder 605 to be pushed out to push the Left receding mechanism 603 and the Right receding mechanism 604 upward respectively, so that the Left receding mechanism 603 and the Right receding mechanism 604 are respectively connected to the two adjacent high-capacity adhesive mixer rail systems 5 to allow the heavy-duty guided vehicle 3 loaded with the high-capacity adhesive mixer 4 to go into a space between the Left receding mechanism 603 and the Right receding mechanism 604 from the high-capacity adhesive mixer rail system 5, subsequently go into the next high-capacity adhesive mixer rail system 5 and finally arrive at the guided vehicle bearing platform 101 located at one end of the frontmost high-capacity adhesive mixer rail system 5;
Step 7, sending, by the PLC circuit, signals to the driving motors 104 to allow the driving motors 104 to rotate anticlockwise to drive the self-locking screws 102 connected thereto to rotate clockwise, so that the guided vehicle bearing platform 101 horizontally and gradually moves downward to a specified position, sending, by the position sensors located on the frame mechanisms 103, signals to the PLC circuit, when the guided vehicle bearing platform 101 moves downward to the specified position, sending, by the PLC circuit, rotating stop signals to the driving motors 104 to allow the heavy-duty guided vehicle 3 to land on the ground, and repeating the above actions until all the heavy-duty guided vehicles 3 land on the ground; and
Step 8, repeating Step 2 to Step 6 to complete the adhesive dispensing to a next blade to realize adhesive dispensing production of wind turbine blades in batches.

### Embodiment 2

Step 1, placing a plurality of high-capacity adhesive mixer rail systems 5 between two halves of a large wind turbine blade mould 2, installing a screw lift 1 at one end of the high-capacity adhesive mixer rail systems 5, installing a receding device 6 between the two adjacent high-capacity adhesive mixer rail systems 5, and determining the number of high-capacity adhesive mixers 4 to be placed on the high-capacity adhesive mixer rail system 5 according to the volume of adhesives dispensed to a wind turbine blade;
A vehicle driving motor 34, follower wheels 31, limit wheels 32 and driving wheels 33 are installed below a vehicle body 35, the vehicle driving motor 34 is connected to the driving wheels 33, and the limit wheels 32 fastened below the vehicle body 35 are clamped in grooves in side faces of the high-capacity adhesive mixer rail system 5 to limit the position of the heavy-duty guided vehicle 3 relative to the high-capacity adhesive mixer rail system 5 in a horizontal direction and a width direction, as shown in FIG. 4.

A left air cylinder 602 and a right air cylinder 605 are respectively connected to air pumps, a Left receding mechanism 603 and a Right receding mechanism 604 are respectively hinged to the high-capacity adhesive mixer rail systems 5 through receding hinges 601, the left air cylinder 602 and the right air cylinder 605 are used for controlling the Left receding mechanism 603 and the Right receding mechanism 604 to be connected and disconnected, and a disconnected size between the Left receding mechanism 603 and the Right receding mechanism 604 is a reserved spatial size required by a turning arm to turn the large wind turbine blade mould 2, as shown in FIG. 5.

Two frame mechanisms 103 arranged oppositely are respectively and perpendicularly installed on a base plate 107, self-locking screws 102 are fastened on the frame mechanisms 103, linear guide pillars 106 that are located on both sides of the self-locking screws 102 and arranged parallel to the self-locking screws 102 are fastened to the frame mechanisms 103 respectively, both sides of a guided vehicle bearing platform 101 horizontally installed above the base plate 107 are respectively clamped onto the two opposite frame mechanisms 103, output ends of speed reducers 105 secured on the base plate 107 are connected to the self-locking screws 102, the guided vehicle bearing platform 101 moves up and down within the two frame mechanisms 103 under rotation of the self-locking screws 102 to convey a plurality of heavy-duty guided vehicles 3 loaded with the high-capacity adhesive mixers 4 into the high-capacity adhesive mixer rail systems 5 in sequence in a lifting mode, as shown in FIG. 6.
Step 2, conveying the heavy-duty guided vehicle 3 loaded with the high-capacity adhesive mixer 4 onto the guided vehicle bearing platform 101, starting a switching power supply of a center console, feeding, by a weight sensor on the guided vehicle bearing platform 101, data back to a PLC circuit after receiving a signal by the weight sensor, determining, by the PLC circuit, whether the volume of adhesives in the high-capacity adhesive mixer 4 satisfies a limit value according to the feedback data of the weight sensor, if the data of the weight sensor satisfies the limit value, sending, by the PLC circuit, a switch-on signal to the center console, and if the data of the weight sensor does not satisfy the limit value, sending, by the PLC circuit, a warning signal to the center console;
Step 3, when the center console receives the switch-on signal sent by the PLC circuit, pressing, by an operator, an on button of the center console, sending, by the PLC circuit, signals to driving motors 104 to allow the driving motors 104 to rotate clockwise to drive the self-locking screws 102 connected thereto to rotate anticlockwise, so that the guided vehicle bearing platform 101 horizontally and gradually moves upward to a specified position, sending, by position sensors located on the frame mechanisms 103, signals to the PLC circuit, after the guided vehicle bearing platform 101 moves upward to the specified position, sending, by the PLC circuit, rotating stop signals to the driving motors 104, sending, by the PLC circuit, a signal to the vehicle driving motor 34 to drive the heavy-duty guided vehicle 3 loaded with the high-capacity adhesive mixer 4 to move on the high-capacity adhesive mixer rail system 5 to the specified position;
Step 4, repeating Step 3, conveying a plurality of heavy-duty guided vehicles 3 loaded with the high-capacity adhesive mixers 4 to the specified positions on the high-capacity adhesive mixer rail systems 5 in sequence, sending, by the PLC circuit, signals to the high-capacity adhesive mixers 4, adjusting positions of adhesive outlets of the high-capacity adhesive mixers 4 by rotating to correspond to the position of the large wind turbine blade mould 2 to prepare for adhesive dispensing, wherein the number of the high-capacity adhesive mixers 4 distributed at a root portion of the large wind turbine blade mould 2 accounts for 72% of the total number of the high-capacity adhesive mixers 4, and a length of the root portion of the large wind turbine blade mould 2 accounts for 35% of an overall length of the large wind turbine blade mould 2;
Step 5, sending, by the PLC circuit, signals to the vehicle driving motors 34 and the high-capacity adhesive mixers 4, driving, by the heavy-duty guided vehicles 3, the high-capacity adhesive mixers 4 to move back and forth on the high-capacity adhesive mixer rail systems 5 at a constant speed, and dispensing, by the high-capacity adhesive mixers 4, adhesives uniformly to the large wind turbine blade mould 2 to obtain adhesive dispensing paths 7 distributed uniformly, wherein the moving positions of the two adjacent heavy-duty guided vehicles 3 are repeated by 13 cm, and an adhesive output volume of the high-capacity adhesive mixer 4 is 16 L/min;
Step 6, when the turning arm is required to join the two halves of the large wind turbine blade mould 2, sending, by the PLC circuit, a signal to the heavy-duty guided vehicle 3 to allow the heavy-duty guided vehicle 3 to move to an initial specified position, sending, by the PLC circuit, signals to the air pumps to stop the air pumps from feeding gas into the left air cylinder 602 and the right air cylinder 605, so that piston rods of the left air cylinder 602 and the right air cylinder 605 return to the insides of pistons, thereby allowing the Left receding mechanism 603 and the Right receding mechanism 604 to be disconnected under the action of the left air cylinder 602 and the right air cylinder 605, wherein a disconnected distance between the Left receding mechanism 603 and the Right receding mechanism 604 is a width required for the turning of the turning arm;
   when the turning arm completes the joining of the two halves of the large wind turbine blade mould 2, sending, by the PLC circuit, signals to the air pumps to allow the piston rods of the left air cylinder 602 and the right air cylinder 605 to be pushed out to push the Left receding mechanism 603 and the Right receding mechanism 604 upward respectively, so that the Left receding mechanism 603 and the Right receding mechanism 604 are respectively connected to the two adjacent high-capacity adhesive mixer rail systems 5 to allow the heavy-duty guided vehicle 3 loaded with the high-capacity adhesive mixer 4 to go into a space between the Left receding mechanism 603 and the Right receding mechanism 604 from the high-capacity adhesive mixer rail system 5, subsequently go into the next high-capacity adhesive mixer rail system 5 and finally arrive at the guided vehicle bearing platform 101 located at one end of the frontmost high-capacity adhesive mixer rail system 5;
Step 7, sending, by the PLC circuit, signals to the driving motors 104 to allow the driving motors 104 to rotate anticlockwise to drive the self-locking screws 102 connected thereto to rotate clockwise, so that the guided vehicle bearing platform 101 horizontally and gradually moves downward to a specified position, sending, by the position sensors located on the frame mechanisms 103, signals to the PLC circuit, when the guided vehicle bearing platform 101 moves downward to the specified position, sending, by the PLC circuit, rotating stop signals to the driving motors 104 to allow the heavy-duty guided vehicle 3 to land on the ground, and repeating the above actions until all the heavy-duty guided vehicles 3 land on the ground; and
Step 8, repeating Step 2 to Step 6 to complete the adhesive dispensing to a next blade to realize adhesive dispensing production of wind turbine blades in batches.

### Embodiment 3

Step 1, placing a plurality of high-capacity adhesive mixer rail systems 5 between two halves of a large wind turbine blade mould 2, installing a screw lift 1 at one end of the high-capacity adhesive mixer rail systems 5, installing a receding device 6 between the two adjacent high-capacity adhesive mixer rail systems 5, and determining the number of high-capacity adhesive mixers 4 to be placed on the high-capacity adhesive mixer rail systems 5 according to the volume of adhesives dispensed to a wind turbine blade;
A vehicle driving motor 34, follower wheels 31, limit wheels 32 and driving wheels 33 are installed below a vehicle body 35, the vehicle driving motor 34 is connected to the driving wheels 33, and the limit wheels 32 fastened below the vehicle body 35 are clamped in grooves in side faces of the high-capacity adhesive mixer rail system 5 to limit the position of the heavy-duty guided vehicle 3 relative to the high-capacity adhesive mixer rail system 5 in a horizontal direction and a width direction, as shown in FIG. 4.

A left air cylinder 602 and a right air cylinder 605 are respectively connected to air pumps, a Left receding mechanism 603 and a Right receding mechanism 604 are respectively hinged to the high-capacity adhesive mixer rail systems 5 through receding hinges 601, the left air cylinder 602 and the right air cylinder 605 are used for controlling the Left receding mechanism 603 and the Right receding mechanism 604 to be connected and disconnected, and a disconnected size between the Left receding mechanism 603 and the Right receding mechanism 604 is a reserved spatial size required by a turning arm to turn the large wind turbine blade mould 2, as shown in FIG. 5.

Two frame mechanisms 103 arranged oppositely are respectively and perpendicularly installed on a base plate 107, self-locking screws 102 are fastened on the frame mechanisms 103, linear guide pillars 106 that are located on both sides of the self-locking screws 102 and arranged parallel to the self-locking screws 102 are fastened to the frame mechanisms 103 respectively, both sides of a guided vehicle bearing platform 101 horizontally installed above the base plate 107 are respectively clamped onto the two opposite frame mechanisms 103, output ends of speed reducers 105 secured on the base plate 107 are connected to the self-locking screws 102, the guided vehicle bearing platform 101 moves up and down within the two frame mechanisms 103 under rotation of the self-locking screws 102 to convey a plurality of heavy-duty guided vehicles 3 loaded with the high-capacity adhesive mixers 4 into the high-capacity adhesive mixer rail systems 5 in sequence in a lifting mode, as shown in FIG. 6.
Step 2, conveying the heavy-duty guided vehicle 3 loaded with the high-capacity adhesive mixer 4 onto the guided vehicle bearing platform 101, starting a switching power supply of a center console, feeding, by a weight sensor on the guided vehicle bearing platform 101, data back to a PLC circuit after receiving a signal by the weight sensor, determining, by the PLC circuit, whether the volume of adhesives in the high-capacity adhesive mixer 4 satisfies a limit value according to the feedback data of the weight sensor, if the data of the weight sensor satisfies the limit value, sending, by the PLC circuit, a switch-on signal to the center console, and if the data of the weight sensor does not satisfy the limit value, sending, by the PLC circuit, a warning signal to the center console;
Step 3, when the center console receives the switch-on signal sent by the PLC circuit, pressing, by an operator, an on button of the center console, sending, by the PLC circuit, signals to driving motors 104 to allow the driving motors 104 to rotate clockwise to drive the self-locking screws 102 connected thereto to rotate anticlockwise, so that the guided vehicle bearing platform 101 horizontally and gradually moves upward to a specified position, sending, by position sensors located on the frame mechanisms 103, signals to the PLC circuit, after the guided vehicle bearing platform 101 moves upward to the specified position, sending, by the PLC circuit, rotating stop signals to the driving motors 104, sending, by the PLC circuit, a signal to the vehicle driving motor 34 to drive the heavy-duty guided vehicle 3 loaded with the high-capacity adhesive mixer 4 to move on the high-capacity adhesive mixer rail system 5 to the specified position;
Step 4, repeating Step 3, conveying a plurality of heavy-duty guided vehicles 3 loaded with the high-capacity adhesive mixers 4 to the specified positions on the high-capacity adhesive mixer rail systems 5 in sequence, sending, by the PLC circuit, signals to the high-capacity adhesive mixers 4, adjusting positions of adhesive outlets of the high-capacity adhesive mixers 4 by rotating to correspond to the position of the large wind turbine blade mould 2 to prepare for adhesive dispensing, wherein the number of the high-capacity adhesive mixers 4 distributed at a root portion of the large wind turbine blade mould 2 accounts for 75% of the total number of the high-capacity adhesive mixers 4, and a length of the root portion of the large wind turbine blade mould 2 accounts for 40% of an overall length of the large wind turbine blade mould 2;
Step 5, sending, by the PLC circuit, signals to the vehicle driving motors 34 and the high-capacity adhesive mixers 4, driving, by the heavy-duty guided vehicles 3, the high-capacity adhesive mixers 4 to move back and forth on the high-capacity adhesive mixer rail systems 5 at a constant speed, and dispensing, by the high-capacity adhesive mixers 4, adhesives uniformly to the large wind turbine blade mould 2 to obtain adhesive dispensing paths 7 distributed uniformly, wherein the moving positions of the two adjacent heavy-duty guided vehicles 3 are repeated by 15 cm, and an adhesive output volume of the high-capacity adhesive mixer 4 is 20 L/min;
Step 6, when the turning arm is required to join the two halves of the large wind turbine blade mould 2, sending, by the PLC circuit, a signal to the heavy-duty guided vehicle 3 to allow the heavy-duty guided vehicle 3 to move to an initial specified position, sending, by the PLC circuit, signals to the air pumps to stop the air pumps from feeding gas into the left air cylinder 602 and the right air cylinder 605, so that piston rods of the left air cylinder 602 and the right air cylinder 605 return to the insides of pistons, thereby allowing the Left receding mechanism 603 and the Right receding mechanism 604 to be disconnected under the action of the left air cylinder 602 and the right air cylinder 605, wherein a disconnected distance between the Left receding mechanism 603 and the Right receding mechanism 604 is a width required for the turning of the turning arm;
   when the turning arm completes the joining of the two halves of the large wind turbine blade mould 2, sending, by the PLC circuit, signals to the air pumps to allow the piston rods of the left air cylinder 602 and the right air cylinder 605 to be pushed out to push the Left receding mechanism 603 and the Right receding mechanism 604 upward respectively, so that the Left receding mechanism 603 and the Right receding mechanism 604 are respectively connected to the two adjacent high-capacity adhesive mixer rail systems 5 to allow the heavy-duty guided vehicle 3 loaded with the high-capacity adhesive mixer 4 to go into a space between the Left receding mechanism 603 and the Right receding mechanism 604 from the high-capacity adhesive mixer rail system 5, subsequently go into the next high-capacity adhesive mixer rail system 5 and finally arrive at the guided vehicle bearing platform 101 located at one end of the frontmost high-capacity adhesive mixer rail system 5;
Step 7, sending, by the PLC circuit, signals to the driving motors 104 to allow the driving motors 104 to rotate anticlockwise to drive the self-locking screws 102 connected thereto to rotate clockwise, so that the guided vehicle bearing platform 101 horizontally and gradually moves downward to a specified position, sending, by the position sensors located on the frame mechanisms 103, signals to the PLC circuit, when the guided vehicle bearing platform 101 moves downward to the specified position, sending, by the PLC circuit, rotating stop signals to the driving motors 104 to allow the heavy-duty guided vehicle 3 to land on the ground, and repeating the above actions until all the heavy-duty guided vehicles 3 land on the ground; and
Step 8, repeating Step 2 to Step 6 to complete the adhesive dispensing to a next blade to realize adhesive dispensing production of wind turbine blades in batches.

The above-mentioned implementations are only used to illustrate technical ideas and characteristics of the present invention so that any person skilled in the art can understand the content of the present invention and implement the content accordingly, but are not intended to limit the protection scope of the present invention.

## Claims

1. A mobile quick adhesive dispensing method for a wind turbine blade moulded by a large mould, comprising the specific steps:
Step 1, installation
placing a plurality of high-capacity adhesive mixer rail systems (5) between two halves of a large wind turbine blade mould (2), installing a screw lift (1) at one end of the high-capacity adhesive mixer rail systems (5), installing a receding device (6) between the two adjacent high-capacity adhesive mixer rail systems (5), and determining the number of high-capacity adhesive mixers (4) to be placed on the high-capacity adhesive mixer rail systems (5) according to the volume of adhesives dispensed to a wind turbine blade;
Step 2, pre-inspection of the high-capacity adhesive mixers
conveying a heavy-duty guided vehicle (3) loaded with a high-capacity adhesive mixer (4) onto a guided vehicle bearing platform (101), starting a switching power supply of a center console, feeding, by a weight sensor on the guided vehicle bearing platform (101), data back to a PLC circuit after receiving a signal by the weight sensor, determining, by the PLC circuit, whether the volume of adhesives in the high-capacity adhesive mixer (4) satisfies a limit value according to the feedback data of the weight sensor, if the data of the weight sensor satisfies the limit value, sending, by the PLC circuit, a switch-on signal to the center console, and if the data of the weight sensor does not satisfy the limit value, sending, by the PLC circuit, a warning signal to the center console;
Step 3, conveying of the high-capacity adhesive mixers
when the center console receives the switch-on signal sent by the PLC circuit, pressing, by an operator, an on button of the center console, sending, by the PLC circuit, signals to driving motors (104) to allow the driving motors (104) to rotate clockwise to drive self-locking screws (102) connected thereto to rotate anticlockwise, so that the guided vehicle bearing platform (101) horizontally and gradually moves upward to a specified position, sending, by position sensors located on frame mechanisms (103), signals to the PLC circuit, after the guided vehicle bearing platform (101) moves upward to the specified position, sending, by the PLC circuit, rotating stop signals to the driving motors (104), sending, by the PLC circuit, a signal to a vehicle driving motor (34) to drive the heavy-duty guided vehicle (3) loaded with the high-capacity adhesive mixer (4) to move on the high-capacity adhesive mixer rail system (5) to the specified position;
Step 4, preparation for adhesive dispensing
repeating Step 3, conveying a plurality of heavy-duty guided vehicles (3) loaded with high-capacity adhesive mixers (4) to the specified positions on the high-capacity adhesive mixer rail systems (5) in sequence, sending, by the PLC circuit, signals to the high-capacity adhesive mixers(4), adjusting positions of adhesive outlets of the high-capacity adhesive mixers (4) by rotating to correspond to the position of the large wind turbine blade mould (2) to prepare for adhesive dispensing;
Step 5, adhesive dispensing
sending, by the PLC circuit, signals to the vehicle driving motors (34) and the high-capacity adhesive mixers (4), driving, by the heavy-duty guided vehicles (3), the high-capacity adhesive mixers (4) to move back and forth on the high-capacity adhesive mixer rail systems (5) at a constant speed, and dispensing, by the high-capacity adhesive mixers (4), adhesives uniformly to the large wind turbine blade mould (2), wherein the moving positions of the two adjacent heavy-duty guided vehicles (3) are partially repeated;
Step 6, receding from a turning arm
when the turning arm is required to join the two halves of the large wind turbine blade mould (2), sending, by the PLC circuit, a signal to the heavy-duty guided vehicle (3) to allow the heavy-duty guided vehicle (3) to move to an initial specified position, sending, by the PLC circuit, signals to air pumps to stop the air pumps from feeding gas into a left air cylinder (602) and a right air cylinder (605), so that piston rods of the left air cylinder (602) and the right air cylinder (605) return to the insides of pistons, thereby allowing a Left receding mechanism (603) and a Right receding mechanism (604) to be disconnected under the action of the left air cylinder (602) and the right air cylinder (605), wherein a disconnected distance between the Left receding mechanism (603) and the Right receding mechanism (604) is a width required for the turning of the turning arm;
when the turning arm completes the joining of the two halves of the large wind turbine blade mould (2), sending, by the PLC circuit, signals to the air pumps to allow the piston rods of the left air cylinder (602) and the right air cylinder (605) to be pushed out to push the Left receding mechanism (603) and the Right receding mechanism (604) upward respectively, so that the Left receding mechanism (603) and the Right receding mechanism (604) are respectively connected to the two adjacent high-capacity adhesive mixer rail systems (5) to allow the heavy-duty guided vehicle (3) loaded with the high-capacity adhesive mixer (4) to go into a space between the Left receding mechanism (603) and the Right receding mechanism (604) from the high-capacity adhesive mixer rail system (5), subsequently go into the next high-capacity adhesive mixer rail system (5) and finally arrive at the guided vehicle bearing platform (101) located at one end of the frontmost high-capacity adhesive mixer rail system (5);
Step 7, landing of the high-capacity adhesive mixers
sending, by the PLC circuit, signals to the driving motors (104) to allow the driving motors (104) to rotate anticlockwise to drive the self-locking screws (102) connected thereto to rotate clockwise, so that the guided vehicle bearing platform (101) horizontally and gradually moves downward to a specified position, sending, by the position sensors located on the frame mechanisms (103), signals to the PLC circuit, when the guided vehicle bearing platform (101) moves downward to the specified position, sending, by the PLC circuit, rotating stop signals to the driving motors (104) to allow the heavy-duty guided vehicle (3) to land on the ground, and repeating the above actions until all the heavy-duty guided vehicles (3) land on the ground; and
Step 8, repeating
repeating Step 2 to Step 6 to complete the adhesive dispensing to a next blade to realize adhesive dispensing production of wind turbine blades in batches.

2. The mobile quick adhesive dispensing method for a wind turbine blade moulded by a large mould according to claim 1, wherein in Step 3, the number of the high-capacity adhesive mixers (4) distributed at a root portion of the large wind turbine blade mould (2) accounts for 70%-75% of the total number of the high-capacity adhesive mixers (4).

3. The mobile quick adhesive dispensing method for a wind turbine blade moulded by a large mould according to claim 2, wherein a length of the root portion of the large wind turbine blade mould (2) accounts for 30%-40% of an overall length of the large wind turbine blade mould (2).

4. The mobile quick adhesive dispensing method for a wind turbine blade moulded by a large mould according to claim 1, wherein in Step 4, the moving positions of the two adjacent heavy-duty guided vehicles (3) are repeated by 10 cm-15 cm.

5. The mobile quick adhesive dispensing method for a wind turbine blade moulded by a large mould according to claim 1, wherein in Step 4, an adhesive output volume of the high-capacity adhesive mixer (4) is 10 L/min-20 L/min.

6. The mobile quick adhesive dispensing method for a wind turbine blade moulded by a large mould according to claim 1, wherein the screw lift (1) comprises the guided vehicle bearing platform (101), the self-locking screws (102), the frame mechanisms (103), the driving motors (104), speed reducers (105), linear guide pillars (106) and a base plate (107);
the two frame mechanisms (103) arranged oppositely are respectively and perpendicularly installed on the base plate (107), the self-locking screws (102) are fastened on the frame mechanisms (103), the linear guide pillars (106) that are located on both sides of the self-locking screws (102) and arranged parallel to the self-locking screws (102) are fastened to the frame mechanisms (103) respectively, both sides of the guided vehicle bearing platform (101) horizontally installed above the base plate (107) are respectively clamped onto the two opposite frame mechanisms (103), and output ends of the speed reducers (105) secured on the base plate (107) are connected to the self-locking screws (102);
internal threads on the guided vehicle bearing platform (101) are connected with external threads of the self-locking screws (102) in a matched mode, and the linear guide pillars (106) arranged oppositely are respectively clamped on side faces of the guided vehicle bearing platform (101); and
the guided vehicle bearing platform (101) moves up and down within the two frame mechanisms (103) under rotation of the self-locking screws (102).

7. The mobile quick adhesive dispensing method for a wind turbine blade moulded by a large mould according to claim 6, wherein the two self-locking screws (102) arranged oppositely are respectively fastened on the frame mechanisms (103).

8. The mobile quick adhesive dispensing method for a wind turbine blade moulded by a large mould according to claim 1, wherein the heavy-duty guided vehicle (3) comprises the vehicle driving motor (34) installed under a vehicle body (35), and follower wheels (31), limit wheels (32) and driving wheels (33) which are all arranged in pairs, the vehicle driving motor (34) is connected to the driving wheels (33), and the limit wheels (32) fastened below the vehicle body (35) are clamped in grooves in side faces of the high-capacity adhesive mixer rail system (5) to limit the position of the heavy-duty guided vehicle (3) relative to the high-capacity adhesive mixer rail system (5) in a horizontal direction and a width direction.

9. The mobile quick adhesive dispensing method for a wind turbine blade moulded by a large mould according to claim 1, wherein the receding device (6) is hinged between the two adjacent high-capacity adhesive mixer rail systems (5).

10. The mobile quick adhesive dispensing method for a wind turbine blade moulded by a large mould according to claim 9, wherein the receding device (6) comprises a Left receding mechanism (603) and a Right receding mechanism (604) which are respectively hinged to the high-capacity adhesive mixer rail systems (5) through receding hinges (601), and a left air cylinder (602) and a right air cylinder (605) which are used for controlling the Left receding mechanism (603) and the Right receding mechanism (604) to be connected and disconnected, and the left air cylinder (602) and the right air cylinder (605) are connected to air pumps.

## Patentansprüche

1. Mobiles Schnellklebstoff-Dosierverfahren für ein mittels einer Großform geformtes Windturbinenblatt, umfassend die folgenden konkreten Schritte:
Schritt 1, Installation
Anordnen einer Mehrzahl von Hochkapazitäts-Klebstoffmischer-Schienensystemen (5) zwischen zwei Formhälften einer großen Windturbinenblattform (2), Installieren einer Spindelhubvorrichtung (1) an einem Ende der Hochkapazitäts-Klebstoffmischer-Schienensysteme (5), Installieren einer Zurückziehvorrichtung (6) zwischen zwei benachbarten Hochkapazitäts-Klebstoffmischer-Schienensystemen (5), und Festlegen der Anzahl der auf den Hochkapazitäts-Klebstoffmischer-Schienensystemen (5) anzuordnenden Hochkapazitäts-Klebstoffmischer (4) gemäß dem Volumen des auf ein Windturbinenblatt dosierten Klebstoffs;
Schritt 2, Vorprüfung der Hochkapazitäts-Klebstoffmischer
Fördern eines Schwerlast-Führungsfahrzeugs (3), das mit einem Hochkapazitäts-Klebstoffmischer (4) beladen ist, auf eine Führungsfahrzeug-Tragplattform (101), Einschalten eines Schaltnetzteils einer Zentralbedienkonsole, Rückmelden, durch einen Gewichtssensor auf der Führungsfahrzeug-Tragplattform (101), von Daten an einen SPS-Schaltkreis nach Empfang eines Signals durch den Gewichtssensor, Bestimmen, durch den SPS-Schaltkreis, ob das Volumen des Klebstoffs in dem Hochkapazitäts-Klebstoffmischer (4) anhand der Rückmeldedaten des Gewichtssensors einen Grenzwert erfüllt, wobei, wenn die Daten des Gewichtssensors den Grenzwert erfüllen, der SPS-Schaltkreis ein Einschalt-Signal an die Zentralbedienkonsole sendet, und wobei, wenn die Daten des Gewichtssensors den Grenzwert nicht erfüllen, der SPS-Schaltkreis ein Warnsignal an die Zentralbedienkonsole sendet;
Schritt 3, Fördern der Hochkapazitäts-Klebstoffmischer
Wenn die Zentralbedienkonsole das vom SPS-Schaltkreis gesendete Einschalt-Signal empfängt, Betätigen, durch einen Bediener, eines Einschaltknopfes der Zentralbedienkonsole, Senden, durch den SPS-Schaltkreis, von Signalen an Antriebsmotoren (104), um die Antriebsmotoren (104) im Uhrzeigersinn rotieren zu lassen, um damit verbundene selbsthemmende Schraubspindeln (102) gegen den Uhrzeigersinn rotieren zu lassen, so dass sich die Führungsfahrzeug-Tragplattform (101) in horizontaler Lage allmählich nach oben zu einer vorgegebenen Position bewegt, Senden, durch an Rahmenmechanismen (103) angeordnete Positionssensoren, von Signalen an den SPS-Schaltkreis, nach dem Hochfahren der Führungsfahrzeug-Tragplattform (101) zur vorgegebenen Position Senden, durch den SPS-Schaltkreis, von Rotations-Stopp-Signalen an die Antriebsmotoren (104), sowie Senden, durch den SPS-Schaltkreis, eines Signals an einen Fahrzeugantriebsmotor (34), um das mit dem Hochkapazitäts-Klebstoffmischer (4) beladene Schwerlast-Führungsfahrzeug (3) auf dem Hochkapazitäts-Klebstoffmischer-Schienensystem (5) zur vorgegebenen Position zu bewegen;
Schritt 4, Vorbereitung der Klebstoffdosierung
Wiederholen von Schritt 3, um eine Mehrzahl von mit Hochkapazitäts-Klebstoffmischern (4) beladenen Schwerlast-Führungsfahrzeugen (3) nacheinander zu den vorgegebenen Positionen auf den Hochkapazitäts-Klebstoffmischer-Schienensystemen (5) zu fördern, Senden, durch den SPS-Schaltkreis, von Signalen an die Hochkapazitäts-Klebstoffmischer (4), und Verstellen der Positionen von Klebstoffauslässen der Hochkapazitäts-Klebstoffmischer (4) durch Drehen, so dass sie der Position der großen Windturbinenblattform (2) entsprechen, um die Klebstoffdosierung vorzubereiten;
Schritt 5, Klebstoffdosierung
Senden, durch den SPS-Schaltkreis, von Signalen an die Fahrzeugantriebsmotoren (34) und die Hochkapazitäts-Klebstoffmischer (4), Antreiben, durch die Schwerlast-Führungsfahrzeuge (3), der Hochkapazitäts-Klebstoffmischer (4), um sich mit konstanter Geschwindigkeit auf den Hochkapazitäts-Klebstoffmischer-Schienensystemen (5) hin und her zu bewegen, und gleichmäßiges Dosieren von Klebstoff, durch die Hochkapazitäts-Klebstoffmischer (4), auf die große Windturbinenblattform (2), wobei sich die Bewegungspositionen von zwei benachbarten Schwerlast-Führungsfahrzeugen (3) teilweise überlappen;
Schritt 6, Ausweichen vor einem Schwenkarm
Wenn der Schwenkarm erforderlich ist, um die zwei Formhälften der großen Windturbinenblattform (2) zusammenzufügen, Senden, durch den SPS-Schaltkreis, eines Signals an das Schwerlast-Führungsfahrzeug (3), um das Schwerlast-Führungsfahrzeug (3) zu einer anfänglichen vorgegebenen Position zu bewegen, und Senden, durch den SPS-Schaltkreis, von Signalen an Luftpumpen, um zu bewirken, dass die Luftpumpen das Einleiten von Gas in einen linken Pneumatikzylinder (602) und einen rechten Pneumatikzylinder (605) stoppen, so dass Kolbenstangen des linken Pneumatikzylinders (602) und des rechten Pneumatikzylinders (605) in die Zylinder zurückfahren, wodurch ein linker Zurückziehmechanismus (603) und ein rechter Zurückziehmechanismus (604) unter der Wirkung des linken Pneumatikzylinders (602) und des rechten Pneumatikzylinders (605) getrennt werden, wobei ein Trennabstand zwischen dem linken Zurückziehmechanismus (603) und dem rechten Zurückziehmechanismus (604) eine für das Schwenken des Schwenkarms erforderliche Breite ist;
wenn der Schwenkarm das Zusammenfügen der zwei Formhälften der großen Windturbinenblattform (2) abgeschlossen hat, Senden, durch den SPS-Schaltkreis, von Signalen an die Luftpumpen, um zu bewirken, dass die Kolbenstangen des linken Pneumatikzylinders (602) und des rechten Pneumatikzylinders (605) herausgedrückt werden, um den linken Zurückziehmechanismus (603) bzw. den rechten Zurückziehmechanismus (604) nach oben zu drücken, so dass der linke Zurückziehmechanismus (603) bzw. der rechte Zurückziehmechanismus (604) jeweils mit den zwei benachbarten Hochkapazitäts-Klebstoffmischer-Schienensystemen (5) verbunden wird, um zu ermöglichen, dass das mit dem Hochkapazitäts-Klebstoffmischer (4) beladene Schwerlast-Führungsfahrzeug (3) von dem Hochkapazitäts-Klebstoffmischer-Schienensystem (5) in einen Raum zwischen dem linken Zurückziehmechanismus (603) und dem rechten Zurückziehmechanismus (604) einfährt, anschließend in das nächste Hochkapazitäts-Klebstoffmischer-Schienensystem (5) einfährt und schließlich an der an einem Ende des vordersten Hochkapazitäts-Klebstoffmischer-Schienensystems (5) angeordneten Führungsfahrzeug-Tragplattform (101) ankommt;
Schritt 7, Absenken der Hochkapazitäts-Klebstoffmischer
Senden, durch den SPS-Schaltkreis, von Signalen an die Antriebsmotoren (104), um die Antriebsmotoren (104) gegen den Uhrzeigersinn rotieren zu lassen, um die damit verbundenen selbsthemmenden Schraubspindeln (102) im Uhrzeigersinn rotieren zu lassen, so dass sich die Führungsfahrzeug-Tragplattform (101) in horizontaler Lage allmählich nach unten zu einer vorgegebenen Position bewegt, Senden, durch die an den Rahmenmechanismen (103) angeordneten Positionssensoren, von Signalen an den SPS-Schaltkreis, wenn die Führungsfahrzeug-Tragplattform (101) zur vorgegebenen Position abgesenkt wird, Senden, durch den SPS-Schaltkreis, von Rotations-Stopp-Signalen an die Antriebsmotoren (104), um zu bewirken, dass das Schwerlast-Führungsfahrzeug (3) auf dem Boden landet, und Wiederholen der vorstehenden Aktionen, bis alle Schwerlast-Führungsfahrzeuge (3) auf dem Boden gelandet sind; und
Schritt 8, Wiederholung
Wiederholen von Schritt 2 bis Schritt 6, um die Klebstoffdosierung auf ein nächstes Blatt abzuschließen, um eine Klebstoffdosierproduktion von Windturbinenblättern chargenweise zu realisieren.

2. Mobiles Schnellklebstoff-Dosierverfahren für ein mittels einer Großform geformtes Windturbinenblatt nach Anspruch 1, wobei in Schritt 3 die Anzahl der Hochkapazitäts-Klebstoffmischer (4), die an einem Wurzelbereich der großen Windturbinenblattform (2) verteilt sind, 70 %-75 % der Gesamtzahl der Hochkapazitäts-Klebstoffmischer (4) ausmacht.

3. Mobiles Schnellklebstoff-Dosierverfahren für ein mittels einer Großform geformtes Windturbinenblatt nach Anspruch 2, wobei eine Länge des Wurzelbereichs der großen Windturbinenblattform (2) 30 %-40 % einer Gesamtlänge der großen Windturbinenblattform (2) ausmacht.

4. Mobiles Schnellklebstoff-Dosierverfahren für ein mittels einer Großform geformtes Windturbinenblatt nach Anspruch 1, wobei in Schritt 4 sich die Bewegungspositionen von zwei benachbarten Schwerlast-Führungsfahrzeugen (3) um 10 cm-15 cm überlappen.

5. Mobiles Schnellklebstoff-Dosierverfahren für ein mittels einer Großform geformtes Windturbinenblatt nach Anspruch 1, wobei in Schritt 4 ein Klebstoff-Ausstoßvolumen des Hochkapazitäts-Klebstoffmischers (4) 10 L/min-20 L/min beträgt.

6. Mobiles Schnellklebstoff-Dosierverfahren für ein mittels einer Großform geformtes Windturbinenblatt nach Anspruch 1, wobei die Spindelhubvorrichtung (1) die Führungsfahrzeug-Tragplattform (101), die selbsthemmenden Schraubspindeln (102), die Rahmenmechanismen (103), die Antriebsmotoren (104), Untersetzungsgetriebe (105), lineare Führungssäulen (106) und eine Grundplatte (107) umfasst;
wobei die zwei einander gegenüber angeordneten Rahmenmechanismen (103) jeweils senkrecht auf der Grundplatte (107) installiert sind, die selbsthemmenden Schraubspindeln (102) an den Rahmenmechanismen (103) befestigt sind, die linearen Führungssäulen (106), die sich auf beiden Seiten der selbsthemmenden Schraubspindeln (102) befinden und parallel zu den selbsthemmenden Schraubspindeln (102) angeordnet sind, jeweils an den Rahmenmechanismen (103) befestigt sind, beide Seiten der über der Grundplatte (107) in horizontaler Lage installierten Führungsfahrzeug-Tragplattform (101) jeweils an die zwei gegenüberliegenden Rahmenmechanismen (103) angeklemmt sind, und Abtriebsenden der auf der Grundplatte (107) befestigten Untersetzungsgetriebe (105) mit den selbsthemmenden Schraubspindeln (102) verbunden sind;
wobei Innengewinde auf der Führungsfahrzeug-Tragplattform (101) in Passung mit Außengewinden der selbsthemmenden Schraubspindeln (102) verbunden sind, und die einander gegenüber angeordneten linearen Führungssäulen (106) jeweils an Seitenflächen der Führungsfahrzeug-Tragplattform (101) angeklemmt sind; und
wobei sich die Führungsfahrzeug-Tragplattform (101) innerhalb der zwei Rahmenmechanismen (103) unter der Rotation der selbsthemmenden Schraubspindeln (102) nach oben und nach unten bewegt.

7. Mobiles Schnellklebstoff-Dosierverfahren für ein mittels einer Großform geformtes Windturbinenblatt nach Anspruch 6, wobei die zwei einander gegenüber angeordneten selbsthemmenden Schraubspindeln (102) jeweils an den Rahmenmechanismen (103) befestigt sind.

8. Mobiles Schnellklebstoff-Dosierverfahren für ein mittels einer Großform geformtes Windturbinenblatt nach Anspruch 1, wobei das Schwerlast-Führungsfahrzeug (3) den unter einem Fahrzeugkörper (35) installierten Fahrzeugantriebsmotor (34) sowie paarweise angeordnete Mitlaufräder (31), Begrenzungsräder (32) und Antriebsräder (33) umfasst, wobei der Fahrzeugantriebsmotor (34) mit den Antriebsrädern (33) verbunden ist, und wobei die unter dem Fahrzeugkörper (35) befestigten Begrenzungsräder (32) in Nuten in Seitenflächen des Hochkapazitäts-Klebstoffmischer-Schienensystems (5) eingreifen, um die Position des Schwerlast-Führungsfahrzeugs (3) relativ zu dem Hochkapazitäts-Klebstoffmischer-Schienensystem (5) in einer Horizontalrichtung und einer Breitenrichtung zu begrenzen.

9. Mobiles Schnellklebstoff-Dosierverfahren für ein mittels einer Großform geformtes Windturbinenblatt nach Anspruch 1, wobei die Zurückziehvorrichtung (6) zwischen zwei benachbarten Hochkapazitäts-Klebstoffmischer-Schienensystemen (5) angelenkt ist.

10. Mobiles Schnellklebstoff-Dosierverfahren für ein mittels einer Großform geformtes Windturbinenblatt nach Anspruch 9, wobei die Zurückziehvorrichtung (6) einen linken Zurückziehmechanismus (603) und einen rechten Zurückziehmechanismus (604) umfasst, die jeweils über Zurückzieh-Scharniere (601) an die Hochkapazitäts-Klebstoffmischer-Schienensysteme (5) angelenkt sind, sowie einen linken Pneumatikzylinder (602) und einen rechten Pneumatikzylinder (605), die zum Steuern des Verbindens und Trennens des linken Zurückziehmechanismus (603) und des rechten Zurückziehmechanismus (604) verwendet werden, wobei der linke Pneumatikzylinder (602) und der rechte Pneumatikzylinder (605) mit Luftpumpen verbunden sind.

## Revendications

1. Procédé mobile de distribution rapide d'adhésif pour une pale d'éolienne moulée au moyen d'un moule de grande dimension, comprenant les étapes spécifiques suivantes :
Étape 1, installation
placer une pluralité de systèmes de rails de mélangeur d'adhésif de grande capacité (5) entre deux moitiés d'un moule de pale d'éolienne de grande dimension (2), installer un élévateur à vis (1) à une extrémité des systèmes de rails de mélangeur d'adhésif de grande capacité (5), installer un dispositif de recul (6) entre deux systèmes de rails de mélangeur d'adhésif de grande capacité (5) adjacents, et déterminer le nombre de mélangeurs d'adhésif de grande capacité (4) à placer sur les systèmes de rails de mélangeur d'adhésif de grande capacité (5) en fonction du volume d'adhésif distribué à une pale d'éolienne ;
Étape 2, pré-inspection des mélangeurs d'adhésif de grande capacité
acheminer un véhicule guidé lourd (3) chargé d'un mélangeur d'adhésif de grande capacité (4) sur une plateforme porteuse de véhicule guidé (101), démarrer une alimentation à découpage de la console centrale, renvoyer, par un capteur de poids sur la plateforme porteuse de véhicule guidé (101), des données vers un circuit d'automate programmable (API) après réception d'un signal par le capteur de poids, déterminer, par le circuit d'API, si le volume d'adhésif dans le mélangeur d'adhésif de grande capacité (4) satisfait une valeur limite selon les données de retour du capteur de poids, si les données du capteur de poids satisfont la valeur limite, envoyer, par le circuit d'API, un signal de mise sous tension à la console centrale, et si les données du capteur de poids ne satisfont pas la valeur limite, envoyer, par le circuit d'API, un signal d'avertissement à la console centrale ;
Étape 3, acheminement des mélangeurs d'adhésif de grande capacité
lorsque la console centrale reçoit le signal de mise sous tension envoyé par le circuit d'API, un opérateur appuie sur un bouton de mise en marche de la console centrale, le circuit d'API envoie des signaux à des moteurs d'entraînement (104) pour permettre aux moteurs d'entraînement (104) de tourner dans le sens horaire afin d'entraîner des vis autobloquantes (102) qui y sont reliées à tourner dans le sens antihoraire, de sorte que la plateforme porteuse de véhicule guidé (101) se déplace progressivement vers le haut tout en restant horizontale jusqu'à une position spécifiée, des capteurs de position situés sur des mécanismes de cadre (103) envoient des signaux au circuit d'API, après le déplacement vers le haut de la plateforme porteuse de véhicule guidé (101) jusqu'à la position spécifiée, le circuit d'API envoie des signaux d'arrêt de rotation aux moteurs d'entraînement (104), et le circuit d'API envoie un signal à un moteur d'entraînement du véhicule (34) afin d'entraîner le véhicule guidé lourd (3) chargé du mélangeur d'adhésif de grande capacité (4) à se déplacer sur le système de rails de mélangeur d'adhésif de grande capacité (5) jusqu'à la position spécifiée ;
Étape 4, préparation à la distribution d'adhésif
répéter l'étape 3, acheminer successivement une pluralité de véhicules guidés lourds (3) chargés de mélangeurs d'adhésif de grande capacité (4) vers les positions spécifiées sur les systèmes de rails de mélangeur d'adhésif de grande capacité (5), le circuit d'API envoie des signaux aux mélangeurs d'adhésif de grande capacité (4), ajuster, par rotation, des positions de sorties d'adhésif des mélangeurs d'adhésif de grande capacité (4) pour correspondre à la position du moule de pale d'éolienne de grande dimension (2) afin de préparer la distribution d'adhésif ;
Étape 5, distribution d'adhésif
le circuit d'API envoie des signaux aux moteurs d'entraînement du véhicule (34) et aux mélangeurs d'adhésif de grande capacité (4), les véhicules guidés lourds (3) entraînent les mélangeurs d'adhésif de grande capacité (4) à se déplacer à vitesse constante en va-et-vient sur les systèmes de rails de mélangeur d'adhésif de grande capacité (5), et les mélangeurs d'adhésif de grande capacité (4) distribuent uniformément l'adhésif sur le moule de pale d'éolienne de grande dimension (2), dans lequel les positions de déplacement de deux véhicules guidés lourds (3) adjacents se chevauchent partiellement ;
Étape 6, retrait par rapport à un bras de retournement
lorsqu'un bras de retournement est requis pour joindre les deux moitiés du moule de pale d'éolienne de grande dimension (2), le circuit d'API envoie un signal au véhicule guidé lourd (3) afin de permettre au véhicule guidé lourd (3) de se déplacer vers une position initiale spécifiée, le circuit d'API envoie des signaux à des pompes à air afin d'empêcher les pompes à air d'alimenter en gaz un vérin pneumatique gauche (602) et un vérin pneumatique droit (605), de sorte que des tiges de piston du vérin pneumatique gauche (602) et du vérin pneumatique droit (605) rentrent à l'intérieur des pistons, permettant ainsi la déconnexion, sous l'action du vérin pneumatique gauche (602) et du vérin pneumatique droit (605), d'un mécanisme de recul gauche (603) et d'un mécanisme de recul droit (604), dans lequel une distance de déconnexion entre le mécanisme de recul gauche (603) et le mécanisme de recul droit (604) correspond à une largeur requise pour le retournement du bras de retournement ;
lorsque le bras de retournement achève le jointement des deux moitiés du moule de pale d'éolienne de grande dimension (2), le circuit d'API envoie des signaux aux pompes à air afin de permettre aux tiges de piston du vérin pneumatique gauche (602) et du vérin pneumatique droit (605) d'être poussées vers l'extérieur pour pousser respectivement vers le haut le mécanisme de recul gauche (603) et le mécanisme de recul droit (604), de sorte que le mécanisme de recul gauche (603) et le mécanisme de recul droit (604) sont respectivement reliés aux deux systèmes de rails de mélangeur d'adhésif de grande capacité (5) adjacents afin de permettre au véhicule guidé lourd (3) chargé du mélangeur d'adhésif de grande capacité (4) d'entrer dans un espace entre le mécanisme de recul gauche (603) et le mécanisme de recul droit (604) depuis le système de rails de mélangeur d'adhésif de grande capacité (5), d'entrer ensuite dans le système de rails de mélangeur d'adhésif de grande capacité (5) suivant et d'arriver finalement à la plateforme porteuse de véhicule guidé (101) située à une extrémité du système de rails de mélangeur d'adhésif de grande capacité (5) le plus en avant ;
Étape 7, descente des mélangeurs d'adhésif de grande capacité
le circuit d'API envoie des signaux aux moteurs d'entraînement (104) afin de permettre aux moteurs d'entraînement (104) de tourner dans le sens antihoraire pour entraîner les vis autobloquantes (102) qui y sont reliées à tourner dans le sens horaire, de sorte que la plateforme porteuse de véhicule guidé (101) se déplace progressivement vers le bas tout en restant horizontale jusqu'à une position spécifiée, des capteurs de position situés sur les mécanismes de cadre (103) envoient des signaux au circuit d'API, lorsque la plateforme porteuse de véhicule guidé (101) se déplace vers le bas jusqu'à la position spécifiée, le circuit d'API envoie des signaux d'arrêt de rotation aux moteurs d'entraînement (104) afin de permettre au véhicule guidé lourd (3) d'atterrir au sol, et les actions ci-dessus sont répétées jusqu'à ce que tous les véhicules guidés lourds (3) atterrissent au sol ; et
Étape 8, répétition
répéter les étapes 2 à 6 pour achever la distribution d'adhésif sur une pale suivante afin de réaliser une production en lots de pales d'éolienne avec distribution d'adhésif.

2. Procédé mobile de distribution rapide d'adhésif pour une pale d'éolienne moulée au moyen d'un moule de grande dimension selon la revendication 1, dans lequel, à l'étape 3, le nombre des mélangeurs d'adhésif de grande capacité (4) répartis au niveau d'une partie racine du moule de pale d'éolienne de grande dimension (2) représente 70 %-75 % du nombre total des mélangeurs d'adhésif de grande capacité (4).

3. Procédé mobile de distribution rapide d'adhésif pour une pale d'éolienne moulée au moyen d'un moule de grande dimension selon la revendication 2, dans lequel une longueur de la partie racine du moule de pale d'éolienne de grande dimension (2) représente 30 %-40 % d'une longueur totale du moule de pale d'éolienne de grande dimension (2).

4. Procédé mobile de distribution rapide d'adhésif pour une pale d'éolienne moulée au moyen d'un moule de grande dimension selon la revendication 1, dans lequel, à l'étape 4, les positions de déplacement de deux véhicules guidés lourds (3) adjacents se chevauchent sur 10 cm-15 cm.

5. Procédé mobile de distribution rapide d'adhésif pour une pale d'éolienne moulée au moyen d'un moule de grande dimension selon la revendication 1, dans lequel, à l'étape 4, un débit de sortie d'adhésif du mélangeur d'adhésif de grande capacité (4) est de 10 L/min-20 L/min.

6. Procédé mobile de distribution rapide d'adhésif pour une pale d'éolienne moulée au moyen d'un moule de grande dimension selon la revendication 1, dans lequel l'élévateur à vis (1) comprend la plateforme porteuse de véhicule guidé (101), les vis autobloquantes (102), les mécanismes de cadre (103), les moteurs d'entraînement (104), des réducteurs (105), des colonnes de guidage linéaire (106) et une plaque de base (107) ;
les deux mécanismes de cadre (103) disposés en vis-à-vis sont respectivement installés perpendiculairement sur la plaque de base (107), les vis autobloquantes (102) sont fixées sur les mécanismes de cadre (103), les colonnes de guidage linéaire (106) situées de part et d'autre des vis autobloquantes (102) et disposées parallèlement aux vis autobloquantes (102) sont respectivement fixées aux mécanismes de cadre (103), les deux côtés de la plateforme porteuse de véhicule guidé (101) installée horizontalement au-dessus de la plaque de base (107) sont respectivement bridés sur les deux mécanismes de cadre (103) opposés, et des extrémités de sortie des réducteurs (105) fixés sur la plaque de base (107) sont reliées aux vis autobloquantes (102) ;
des filetages internes sur la plateforme porteuse de véhicule guidé (101) sont engagés de manière correspondante avec des filetages externes des vis autobloquantes (102), et les colonnes de guidage linéaire (106) disposées en vis-à-vis sont respectivement bridées sur des faces latérales de la plateforme porteuse de véhicule guidé (101) ; et
la plateforme porteuse de véhicule guidé (101) se déplace vers le haut et vers le bas à l'intérieur des deux mécanismes de cadre (103) sous l'effet de la rotation des vis autobloquantes (102).

7. Procédé mobile de distribution rapide d'adhésif pour une pale d'éolienne moulée au moyen d'un moule de grande dimension selon la revendication 6, dans lequel les deux vis autobloquantes (102) disposées en vis-à-vis sont respectivement fixées sur les mécanismes de cadre (103).

8. Procédé mobile de distribution rapide d'adhésif pour une pale d'éolienne moulée au moyen d'un moule de grande dimension selon la revendication 1, dans lequel le véhicule guidé lourd (3) comprend le moteur d'entraînement du véhicule (34) installé sous un corps de véhicule (35), et des roues suiveuses (31), des roues de limitation (32) et des roues motrices (33) toutes disposées par paires, le moteur d'entraînement du véhicule (34) étant relié aux roues motrices (33), et les roues de limitation (32) fixées sous le corps de véhicule (35) étant engagées dans des rainures des faces latérales du système de rails de mélangeur d'adhésif de grande capacité (5) afin de limiter la position du véhicule guidé lourd (3) par rapport au système de rails de mélangeur d'adhésif de grande capacité (5) dans une direction horizontale et une direction de largeur.

9. Procédé mobile de distribution rapide d'adhésif pour une pale d'éolienne moulée au moyen d'un moule de grande dimension selon la revendication 1, dans lequel le dispositif de recul (6) est articulé entre deux systèmes de rails de mélangeur d'adhésif de grande capacité (5) adjacents.

10. Procédé mobile de distribution rapide d'adhésif pour une pale d'éolienne moulée au moyen d'un moule de grande dimension selon la revendication 9, dans lequel le dispositif de recul (6) comprend un mécanisme de recul gauche (603) et un mécanisme de recul droit (604) respectivement articulés aux systèmes de rails de mélangeur d'adhésif de grande capacité (5) au moyen de charnières de recul (601), et un vérin pneumatique gauche (602) et un vérin pneumatique droit (605) utilisés pour commander la connexion et la déconnexion du mécanisme de recul gauche (603) et du mécanisme de recul droit (604), le vérin pneumatique gauche (602) et le vérin pneumatique droit (605) étant reliés à des pompes à air.
